# EUROPÄISCHE PATENTSCHRIFT

(11) **EP 1 542 878 B1**
(45) Veröffentlichungstag und Bekanntmachung des Hinweises auf die Patenterteilung: **30.01.2013**
(21) Anmeldenummer: 03775160.9
(22) Anmeldetag: 18.09.2003
(51) Int. Cl.: B60G 17/015, B60G 17/056, B60G 21/073, B60G 21/10

(54) **HYDRAULISCHE STABILISIERUNGSEINRICHTUNG FÜR FAHRZEUGE**
HYDRAULIC STABILISING DEVICE FOR VEHICLES
SYSTEME DE STABILISATION HYDRAULIQUE POUR VEHICULES

(30) Priorität: 24.09.2002 DE 10244362
(43) Veröffentlichungstag der Anmeldung: 22.06.2005
(73) Patentinhaber: Daimler AG, 70327 Stuttgart (DE)
(72) Erfinder: KOCH, Norbert, 71131 Jettingen (DE); SCHULZ, Walter, 70378 Stuttgart (DE)
(74) Vertreter: JENSEN & SON
(86) Internationale Anmeldenummer: PCT/EP2003/010388
(87) Internationale Veröffentlichungsnummer: WO 2004/028838

(56) Entgegenhaltungen:
- DE-A- 19 629 582
- US-A- 5 060 968

## Beschreibung

Die Erfindung betrifft eine hydraulische Stabilisierungseinrichtung für Fahrzeuge mit einem in entgegengesetzten Richtungen beaufschlagbaren Aktuator, insbesondere eine Stabilisierungseinrichtung mit einem einer Achse eines Fahrzeuges zugeordneten Aktuator, gemäß dem Oberbegriff des Anspruches 1.

Hydraulische Stabilisierungseinrichtungen der vorgenannten Art sind aus der DE 196 29 582 A1 bekannt, bei der im Übergang zwischen einer aus einer Drucksenke versorgten Pumpe als Druckquelle einerseits und einem gegensinnig beaufschlagbaren Aktuator andererseits in Hintereinanderschaltung zwei 4/2-Wegeventile angeordnet sind, deren eines als Umschalteinrichtung zwischen einer direkten und überkreuzten Durchlaufstellung benachbart zur Pumpe liegt und deren anderes, stromauf der Umschalteinrichtung im Übergang auf den Aktuator liegendes eine Umschaltvorrichtung bildet, die zwischen einer Durchlaufstellung und einer Sperrstellung umschaltbar ist, wobei die Sperrstellung die Grundstellung bildet. Sinn dieser Anordnung ist es, über die Umschalteinrichtung die wechselseitige Beaufschlagung des Aktuators zu ermöglichen, und über die Umschaltvorrichtung gleichzeitig sicherzustellen, dass bei Ausfall der der Umschalteinrichtung und/oder der Umschaltvorrichtung zugeordneten Steuereinrichtung ebenso wie beispielsweise bei Hängenbleiben der Umschalteinrichtung in einer Zwischenstellung über die Umschaltvorrichtung, deren Grundstellung eine Sperrstellung ist, der Aktuator gegen Druckquelle und Drucksenke abgesperrt und damit blockiert wird, so dass ein definierter Funktionszustand sichergestellt ist.

Jeder Ausfall der Umschalteinrichtung bedingt damit ein Blockieren des Aktuators und bedeutet den Ausfall der aktiven Stabilisierung, was bei Gewöhnung an ein derartiges aktives Stabilisierungssystem als erhebliche Komfort- und Sicherheitseinbuße empfunden wird und zum Aufsuchen der Werkstatt zwingt.

Der Erfindung liegt die Aufgabe zugrunde, eine Stabilisierungseinrichtung der eingangs genannten Art ohne Sicherheitseinbuße dahingehend weiterzubilden, dass Fehlfunktionen sowohl in der Umschalteinrichtung wie auch in der Umschaltvorrichtung zumindest für eine Übergangszeit jeweils im System im Hinblick auf ein weiteres aktives Betreiben des Aktuators korrigiert werden können.

Gemäß der Erfindung wird dies mit den Merkmalen des Anspruches 1 erreicht, demzufolge die Umschaltvorrichtung durch zwei gesonderte und in Parallelschaltung angeordnete Umschaltventile gebildet ist, die unterschiedliche Durchlaufstellungen und jeweils eine Sperrstellung aufweisen und somit in einfacher Weise als 4/2-Wegeventile ausgebildet werden können. Fällt die Umschalteinrichtung aus, die bevorzugt eine direkte Durchgangsstellung als federbelastete Grundstellung aufweist und ebenfalls in einfacher Weise als 4/2-Wegeventil mit direkter und überkreuzter Durchgangsstellung als Schaltstellungen ausgebildet sein kann, so kann über die entsprechende Ansteuerung der die Umschaltvorrichtung bildenden Umschaltventile die wechselseitige Ansteuerung des Aktuators sichergestellt werden. Fällt eines der Umschaltventile der Umschaltvorrichtung aus, so ist zwar über die Umschaltventile der Umschaltvorrichtung nur noch eine direkte oder eine Überkreuzansteuerung des Aktuators möglich, kombiniert mit einer entsprechenden Ansteuerung der Umschalteinrichtung ist aber dennoch eine wechselseitige Ansteuerung des Aktuators möglich. Somit ist die Wahrscheinlichkeit, dass ein Systemausfall zur Blockierung des Aktuators zwingt, wesentlich geringer und notwendige Reparaturmaßnahmen können in aller Regel auf Werkstattbesuche im Rahmen vorgegebener Serviceintervalle reduziert werden.

Zudem bietet die erfindungsgemäße Lösung ohne Einschränkung in ihrer Funktionalität weitgehende Möglichkeiten in der Anordnung von Umschalteinrichtung und Umschaltvorrichtung im Übergang zwischen Pumpe und Aktuator, wobei auch die Zusammenfassung in einem Ventilblock möglich ist.

Insbesondere erweist sich die erfindungsgemäße hydraulische Stabilisierungseinrichtung für eine der Achsen, insbesondere die Vorderachse eines Personenkraftwagens als zweckmäßig, wobei als Aktuator insbesondere ein Hydromotor vorgesehen ist, über den die beiden Hälften eines Stabilisators gegeneinander verstellbar sind. Selbstverständlich liegt es aber auch im Rahmen der Erfindung, bei zwei- oder mehrachsigen, mehrspurigen Fahrzeugen für alle Achsen eine erfindungsgemäße hydraulische Stabilisierungseinrichtung vorzusehen. Im Rahmen der Erfindung liegen aber auch andere Einsatzgebiete, wie beispielsweise in der Ansteuerung und Beaufschlagung von Aktuatoren in Servolenkungen, wobei als Aktuatoren Hydromotoren wie auch Linearaktuatoren wie Hydraulikzylinder vorgesehen sein können.

Als vorteilhaft erweist sich des Weiteren der Einsatz einer hydraulischen Stabilisierungseinrichtung gemäß der Erfindung an einer Achse eines mehrachsigen, insbesondere zweiachsigen Fahrzeuges, das auch bezüglich der zweiten Achse, bevorzugt der Hinterachse einen insbesondere als Hydromotor ausgebildeten, gegensinnig beaufschlagbaren Aktuator aufweist.

Weitere Einzelheiten und Merkmale der Erfindung ergeben sich aus den Ansprüchen. Ferner wird die Erfindung nachstehend an Hand von Ausführungsbeispielen erläutert. Es zeigen:
- Fig. 1: im Schema einen hydraulischen Schaltplan für ein insbesondere als Personenkraftwagen ausgebildetes zweiachsiges Fahrzeug mit aktiver Wankstabilisierung, wobei der Vorderachse des Fahrzeuges eine hydraulische Stabilisierungseinrichtung gemäß der Erfindung zugeordnet ist, und
- Fig. 2 und 3: verschiedene Ausgestaltungen der erfindungsgemäßen, der Vorderachse zugeordneten hydraulischen Stabilisierungseinrichtung, wiederum im Schema.

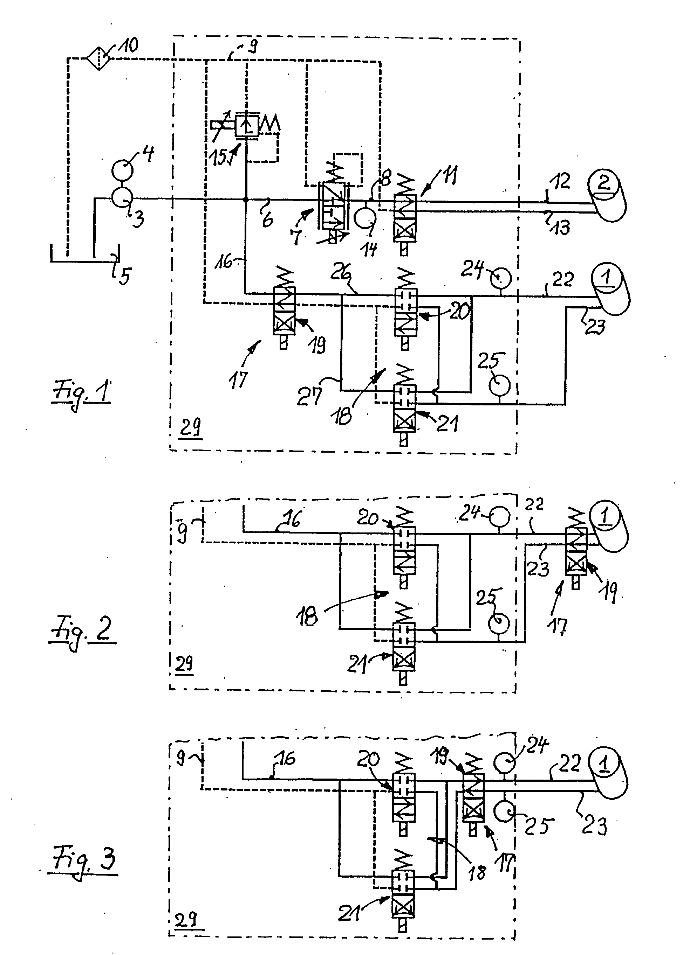

In Fig. 1 ist, stark schematisiert, das Hydrauliksystem einer aktiven Wankstabilisierung für zweiachsige Fahrzeuge, insbesondere Personenkraftwagen dargestellt, wobei der Vorderachse und der Hinterachse jeweils ein Aktuator 1 bzw. 2 zugeordnet ist, der symbolisch als Hydromotor dargestellt ist, welcher zwischen den den beiden Achsseiten zugehörigen Stabilisatorteilen liegt und über den, entsprechend der jeweiligen hydraulischen Beaufschlagung, die Stabilisatorteile gegenläufig gegeneinander verdrehbar sind. Bezogen auf die dargestellten Ausführungsbeispiele ist der Aktuator 1 insbesondere der Vorderachse, und der Aktuator 2 insbesondere der Hinterachse eines jeweiligen Fahrzeuges zugeordnet.

Die Aktuatoren 1 und 2 sind in das hydraulische System der aktiven Wankstabilisierung eingebunden, das als Druckquelle eine Pumpe 3 aufweist, die beispielsweise als Radialkolbenpumpe ausgebildet und über den Motor 4 angetrieben ist. Die Pumpe 3 wird aus dem Vorratsbehälter 5 als Drucksenke versorgt, auf den der Rücklauf ausmündet, wobei im dargestellten Ausführungsbeispiel die druckbeaufschlagbaren Leitungsverbindungen insgesamt in durchgezogenen Linien dargestellt sind, während die niederdruckseitigen, auf den Vorratsbehälter 5 auslaufenden Leitungswege strichliert angedeutet sind.

Ausgehend von der Pumpe 3 liegt in der druckseitigen Leitung 6 ein drosselndes 2/2-Wegeventil 7, das auf eine Grundstellung feder- und druckbelastet ist, in der die druckseitige Verbindung zum Aktuator 2 abgesteuert ist und die vom Wegeventil 7 zum Aktuator 2 führende, druckbeaufschlagbare Leitung 8 an die auf den Vorratsbehälter 5 ausmündende, niederdruckseitige Rücklaufleitung 9 angeschlossen ist, in der ein Filter 10 im Auslauf auf den Vorratsbehälter 5 vorgesehen ist. An das Wegeventil 7 ist über die Leitung 8 ein 4/2-Wegeventil 11 angeschlossen, das eine federbelastete Grundstellung aufweist, in der eine direkte Durchlaufverbindung gegeben ist, sowie eine zweite Schaltstellung für einen überkreuzten Durchlauf. Je nach Schaltstellung ist eine der Leitungen 12 oder 13 in der Verbindung des Wegeventiles 11 zum Aktuator 2 an die druckbeaufschlagbare Leitung 8 oder an die Rücklaufleitung 9 angeschlossen. Der Leitung 8 ist ein Drucksensor 14 zugeordnet, und es ist des Weiteren druckseitig eine Druckbegrenzung über ein Druckbegrenzungsventil 15 vorgesehen, wobei das Druckbegrenzungsventil 15 ebenso wie das drosselnde Wegeventil 7 in ihrem Durchlassquerschnitt entsprechend der Bestromung ihrer Stellmagneten variabel sind. Die Ansteuerung erfolgt über ein nicht dargestelltes Steuergerät, ebenso wie für das schwarzweiß umstellbare Wegeventil 11 in Berücksichtigung von für die Wankstabilisierung relevanten Parametern und/oder von über den Drucksensor 4 erfassten Druckwerten.

Die an die Pumpe 3 anschließende, druckseitige Leitung 6, die über das Druckbegrenzungsventil 15 eine Verbindung zur rücklaufseitigen Leitung 9 aufweist, weist eine Leitungsverbindung 16 zum der Vorderachse zugehörigen Aktuator 1 auf, in der hintereinander, also in Reihe liegend, eine Umschalteinrichtung 17 und eine Umschaltvorrichtung 18 vorgesehen sind. Die Umschalteinrichtung 17 liegt im Ausführungsbeispiel gemäß Fig. 1 ausgehend von der Pumpe 3 stromauf der Umschaltvorrichtung 18 und ist durch ein 4/2-Wegeventil 19 gebildet, das zwischen einer direkten und einer überkreuzten Durchlaufstellung umschaltbar ist und auf die direkte Durchlaufstellung als Grundstellung vorbelastet ist, insbesondere federbelastet ist.

Druckseitig stromab der Umschalteinrichtung 17 liegt die Umschaltvorrichtung 18, die durch zwei voneinander unabhängige 4/2-Wegeventile 20 und 21 gebildet ist, welche jeweils eine Sperrstellung sowie eine Durchlaufstellung aufweisen, wobei für das eine der Wegeventile, hier das Wegeventil 20 die Durchlaufstellung direkt und für das Wegeventil 21 überkreuzt ausgebildet ist. Dementsprechend ist über die Wegeventile 20 und 21 der Umschaltvorrichtung 18 die Leitungsverbindung 16 schaltstellungsabhängig jeweils mit einer der Leitungen 22 oder 23 verbunden, über die der Aktuator 1 zur gegensinnigen Verstellung wahlweise jeweils mit Druck zu beaufschlagen ist. Die Wegeventile 20 und 21 weisen ihre Sperrstellung als Grundstellung auf, auf die sie belastet, insbesondere federbelastet sind, und sie sind in Gegenrichtung zum Beispiel magnetisch verstellbar, wobei die Ansteuerung wiederum über das bereits angesprochene Steuergerät erfolgt. Von den Wegeventilen 20 und 21 ist im Falle der Ansteuerung jeweils nur eines in eine Durchlaufstellung umgeschaltet, mit dem Effekt, dass druckseitig, und in entsprechend auch niederdruckseitig bei Beaufschlagung des Wegeventiles 20 eine direkte und bei Ansteuerung des Wegeventiles 21 eine überkreuzte Durchlaufverbindung gegeben ist.

Mit 24 und 25 sind Drucksensoren bezeichnet, die den Leitungen 22 bzw. 23 zugeordnet und, was nicht gezeigt ist, mit dem Steuergerät verbunden sind. Weiter sind die Wegeventile 20 und 21 bezüglich ihrer Leitungsanschlüsse parallel geschaltet.

Die geschilderte Kombination von durch ein Wegeventil 19 gebildeter Umschalteinrichtung 17 und durch Wegeventile 20 und 21 gebildeter Umschaltvorrichtung 18 bietet unter Sicherheitsaspekten und daraus resultierenden Serviceanforderungen besondere Vorteile, da sowohl bei Ausfall in der Schaltfunktion für das Wegeventil 19 wie auch in der Schaltfunktion für die Wegeventile 20 oder 21 noch die volle Funktionalität gewährleistet ist. Fällt das Wegeventil 19 aus, so nimmt es seine Grundstellung ein, in der die druckseitige Leitungsverbindung zu einer Leitung 26 sowie zu einer hierzu abgezweigten Leitung 27 gegeben ist. Entsprechend sind bezüglich der Ventile 20 und 21 die gleichen Anschlüsse beaufschlagt. Über diese ist bei Umschaltung des Ventiles 20 eine Verbindung zur Leitung 22, und bei Umschaltung des Ventiles 21 eine Verbindung zur Leitung 23 geschaltet, so dass ungeachtet der beibehaltenen Grundstellung des Wegeventiles 19 eine gegensinnige Beaufschlagung des Aktuators 1 möglich ist. Entsprechendes gilt, wenn das Wegeventil 19 beispielsweise durch Verklemmen in seiner überkreuzten Durchlaufstellung hängen bleiben würde.

Fällt eines der Wegeventile 20 oder 21 aus, so ist ebenfalls die volle Funktionsfähigkeit gegeben. Das ausfallende Ventil verbleibt in seiner Sperrstellung, so zum Beispiel das Ventil 20, das andere Ventil 21 wird beaufschlagt und stellt eine überkreuzte Verbindung her. Diese ermöglicht in Abhängigkeit von der jeweiligen Schaltstellung des Wegeventiles 19, das die Umschalteinrichtung 18 bildet, wiederum die wechselseitige Beaufschlagung des Aktuators 1. Ungeachtet dieser Variabilität ergibt sich, beispielsweise bei Ausfall der Bestromung für die beiden Wegeventile 20 und 21 der Umschaltvorrichtung 18 eine Sperrstellung und damit eine Blockade des Aktuators 1. Dadurch, dass in Verbindung mit der geschilderten Anordnung die Funktion eines der Wegeventile 19 bzw. 20 bzw. 21 durch entsprechende Verschaltung im Verbund durch die anderen Wegeventile 19 bzw. 20 bzw. 21 wahrgenommen werden kann, ergibt sich eine erhöhte Sicherheit gegen Totalausfall, und es wird insbesondere die volle Funktionalität mit einer ausreichenden Sicherheitsmarge aufrechterhalten, so dass keine Notwendigkeit für eine sofortige Reparatur besteht und etwaige Reparaturmaßnahmen auf die Regel-Sevicetermine konzentriert werden können.

Fig. 2 und 3 zeigen bezüglich der den vorderachsseitigen Aktuator 1 umfassenden hydraulischen Stabilisierungseinrichtung einen bezüglich der lagemäßigen Einbindung der Umschalteinrichtung 17 veränderten Aufbau, und es ist lediglich der entsprechende Ausschnitt aus Fig. 1 gezeigt, wobei gleiche Teile mit gleichen Bezugszeichen versehen sind und auf die Beschreibung der Funktionen, der an Hand der Fig. 1 erfolgte, Bezug genommen wird.

Abweichend von Fig. 1 ist die Umschalteinrichtung 17 in den Fig. 2 und 3 nicht stromab, sondern stromauf der Umschaltvorrichtung 18 und im Übergang von dieser auf den Aktuator 1 angeordnet, wobei in Fig. 2 das Wegeventil 19 der Umschalteinrichtung 17 als gesonderte Baueinheit im unmittelbaren Zulauf auf den Aktuator 1, gegebenenfalls auch zu diesem integriert angeordnet ist, während in Fig. 3 für die Umschalteinrichtung 17 und das diese bildende Wegeventil 19 die Integration in einen Ventilblock 29 gezeigt ist, in dem gegebenenfalls die angesprochenen Steuer- und Überwachungselemente zusammengefasst sind. Die hydraulische Stabilisierungseinrichtung gemäß der Erfindung ermöglicht somit nicht nur funktional, sondern auch in ihrem konstruktiven Aufbau eine hohe Variabilität.

Als Aktuatoren sind im Rahmen der Erfindung sowohl Hydromotoren wie auch hydraulische Stellzylinder einsetzbar, und es liegt ferner auch im Rahmen der Erfindung, nicht nur die Vorderachse, sondern auch die Hinterachse oder nur die Hinterachse über eine Kombination von Umschalteinrichtung 17 und Umschaltvorrichtung 18 bezüglich ihres Aktuators anzusteuern.

## Patentansprüche

1. Hydraulische Stabilisierungseinrichtung für Fahrzeuge mit einem in entgegengesetzten Richtungen beaufschlagbaren Aktuator, insbesondere Wankstabilisierungseinrichtung mit einem einer Achse eines Fahrzeuges zugeordneten Aktuator, auf dessen den entgegengesetzten Stellrichtungen entsprechenden Beaufschlagungsseiten Anschlussleitungen ausmünden, in deren Verbindung zu einer Druckquelle und einer Drucksenke eine Umschalteinrichtung, die zwischen einer direkten und einer überkreuzten Durchlaufstellung umschaltbar ist, sowie in Reihe hierzu eine Umschaltvorrichtung liegen, die zwischen einer Durchlaufstellung und einer Sperrstellung als Grundstellung umschaltbar ist,
**dadurch gekennzeichnet,**
**dass** die Umschaltvorrichtung (18) zwei gesonderte, parallel zueinander angeordnete Umschaltventile (20, 21) umfasst, von denen das eine Umschaltventil (20) eine Sperrstellung und eine direkte Durchlaufstellung und das andere Umschaltventil (21) eine Sperrstellung und eine überkreuzte Durchlaufstellung aufweist.

2. Hydraulische Stabilisierungseinrichtung nach Anspruch 1,
**dadurch gekennzeichnet,**
**dass** die Umschalteinrichtung (17) durch ein 4/2-Wegeventil gebildet ist.

3. Hydraulische Stabilisierungseinrichtung nach Anspruch 1 oder 2,
**dadurch gekennzeichnet,**
**dass** die Umschaltventile (20, 21) der Umschaltvorrichtung (18) durch 4/2-Wegeventile gebildet sind.

4. Hydraulische Stabilisierungseinrichtung nach einem der vorhergehenden Ansprüche,
**dadurch gekennzeichnet,**
**dass** die Umschalteinrichtung (17) stromauf der Umschaltvorrichtung (18) angeordnet ist.

5. Hydraulische Stabilisierungseinrichtung nach einem der Ansprüche 1 bis 3,
**dadurch gekennzeichnet,**
**dass** die Umschalteinrichtung (17) stromab der Umschaltvorrichtung (18) angeordnet ist.

6. Hydraulische Stabilisierungseinrichtung nach einem der vorhergehenden Ansprüche,
**dadurch gekennzeichnet,**
**dass** stromab der Umschaltvorrichtung (18) in den zum Aktuator führenden Leitungen (22, 23) Drucksensoren (24, 25) angeordnet sind. -

7. Hydraulische Stabilisierungseinrichtung nach Anspruch 5 oder 6,
**dadurch gekennzeichnet,**
**dass** die Drucksensoren (24, 25) zwischen Umschaltvorrichtung (18) und Umschalteinrichtung (17) liegen. - 8. Hydraulische Stabilisierungseinrichtung nach Anspruch 5 oder 6,
**dadurch gekennzeichnet,**
**dass** die Drucksensoren (24, 25) stromab der Umschalteinrichtung (19) liegen.

## Claims

1. Hydraulic stabilising device for vehicles, comprising an actuator which can be pressurised in opposite directions, in particular roll stabilising device comprising an actuator assigned to an axle of a vehicle, on the pressurisation sides of which actuator, which correspond to opposite actuation directions, connecting lines terminate, in the connection of which to a pressure source or a pressure sink there are provided a changeover means which can be switched between a direct and a crossed-over flow-through position and, in series herewith, a changeover device which can be switched between a flow-through position and a blocking position,
**characterised in that**
the changeover device (18) comprises two separate changeover valves (20, 21) arranged parallel to each other, of which one changeover valve (20) has a blocking position and a direct flow-through position and the other changeover valve (21) has a blocking position and a crossed-over flow-through position.

2. Hydraulic stabilising device according to claim 1,
**characterised in that**
the changeover means (17) is represented by a 4/2-way valve.

3. Hydraulic stabilising device according to claim 1 or 2,
**characterised in that**
the changeover valves (20, 21) of the changeover device (18) are represented by 4/2-way valves.

4. Hydraulic stabilising device according to any of the preceding claims,
**characterised in that**
the changeover means (17) is located upstream of the changeover device (18).

5. Hydraulic stabilising device according to any of claims 1 to 3,
**characterised in that**
the changeover means (17) is located downstream of the changeover device (18).

6. Hydraulic stabilising device according to any of the preceding claims,
**characterised in that**
pressure sensors (24, 25) are provided in the lines (22, 23) leading to the actuator downstream of the changeover device (18).

7. Hydraulic stabilising device according to claim 5 or 6,
**characterised in that**
the pressure sensors (24, 25) are located between the changeover device (18) and the changeover means (17).

8. Hydraulic stabilising device according to claim 5 or 6,
**characterised in that**
the pressure sensors (24, 25) are located downstream of the changeover means (19).

## Revendications

1. Système de stabilisation hydraulique pour véhicules comportant un actionneur pouvant être alimenté dans des directions opposées, en particulier un dispositif de stabilisation de roulis avec un actionneur associé à un axe d'un véhicule, sur les côtés d'alimentation correspondants dudit actionneur débouchent dans des directions de réglage opposées des conduites de raccordement, dans leur raccordement avec une source de pression et un puits de pression une unité d'inversion qui peut commuter entre une position de passage direct et une position de passage en croix, ainsi qu'une unité d'inversion montée en série par rapport à ladite unité d'inversion, qui peut commuter entre une position de passage et une position d'obturation en tant que position initiale, **caractérisé en ce que** l'unité d'inversion (18) comprend deux soupapes d'inversion (20, 21) séparées, disposées parallèlement l'une par rapport à l'autre, l'une des soupapes d'inversion (20) présentant une position d'obturation et une position de passage direct et l'autre soupape d'inversion (21) présentant une position d'obturation et une position de passage en croix.

2. Système de stabilisation hydraulique selon la revendication 1 **caractérisé en ce que** l'unité d'inversion (17) est formée par un distributeur 4/2.

3. Dispositif de stabilisation hydraulique selon la revendication 1 ou la revendication 2, **caractérisé en ce que** les soupapes d'inversion (20, 21) de l'unité d'inversion (18) sont formées par des distributeurs 4/2.

4. Dispositif de stabilisation hydraulique selon l'une quelconque des revendications précédentes, **caractérisé en ce que** l'unité d'inversion (17) est disposée en amont de l'unité d'inversion (18).

5. Système de stabilisation hydraulique selon l'une des revendications 1 à 3, **caractérisé en ce que** l'unité d'inversion (17) est disposée en aval de l'unité d'inversion (18).

6. Dispositif de stabilisation hydraulique selon l'une quelconque des revendications précédentes, **caractérisé en ce qu'**en aval de l'unité d'inversion (18) dans les conduites (22, 23) menant à l'actionneur sont disposés des capteurs de pression (24, 25).

7. Dispositif de stabilisation hydraulique selon la revendication 5 ou la revendication 6, **caractérisé en ce que** les capteurs de pression (24, 25) se trouvent entre l'unité d'inversion(18) et l'unité d'inversion (17).

8. Dispositif de stabilisation hydraulique selon la revendication 5 ou la revendication 6, **caractérisé en ce que** les capteurs de pression (24, 25) se trouvent en aval de l'unité d'inversion(19).
